# EUROPÄISCHE PATENTSCHRIFT

(11) **EP 4 275 970 B1**
(45) Veröffentlichungstag und Bekanntmachung des Hinweises auf die Patenterteilung: **23.07.2025**
(21) Anmeldenummer: 23171766.1
(22) Anmeldetag: 05.05.2023
(51) Int. Cl.: B60S 3/00

(54) **DÜSENEINRICHTUNG, SEITENTROCKNUNGSVORRICHTUNG MIT EINER DÜSENEINRICHTUNG UND FAHRZEUGBEHANDLUNGSANLAGE**
NOZZLE DEVICE, SIDE DRYING DEVICE HAVING A NOZZLE DEVICE, AND VEHICLE TREATMENT SYSTEM
DISPOSITIF DE BUSE, DISPOSITIF DE SÉCHAGE LATÉRAL DOTÉ D'UN DISPOSITIF DE BUSE ET INSTALLATION DE TRAITEMENT DE VÉHICULE

(30) Priorität: 13.05.2022 DE 102022112135
(43) Veröffentlichungstag der Anmeldung: 15.11.2023
(73) Patentinhaber: Alfred Kärcher SE & Co. KG, 71364 Winnenden (DE)
(72) Erfinder: Veitz, Yann, 71364 Winnenden (DE); Ulrichskötter, Heinz-Peter, 71364 Winnenden (DE); Speckmaier, André, 71364 Winnenden (DE)
(74) Vertreter: DTS Patent- und Rechtsanwälte PartmbB

(56) Entgegenhaltungen:
- DE-A1- 2 314 072
- DE-U1- 202015 101 200
- KR-B1- 100 668 439
- US-A- 2 874 485

## Beschreibung

Die vorliegende Erfindung betrifft eine Düseneinrichtung für eine Seitentrocknungsvorrichtung einer Fahrzeugbehandlungsanlage, welche Düseneinrichtung mit in einer Zuströmrichtung einströmenden Trocknungsluft beaufschlagbar ist und eine Auslassdüse umfasst oder bildet, die eine schlitzförmige Auslassöffnung umfasst, die sich von einer in der Zuströmrichtung ersten Seite der Auslassdüse zu einer strömungsabwärts gelegenen zweiten Seite der Auslassdüse erstreckt, wobei im bestimmungsgemäßen Gebrauch der Düseneinrichtung die erste Seite oben und die zweite Seite unten an der Auslassdüse angeordnet ist und die Auslassöffnung über ihre Erstreckung von der ersten Seite in Richtung der zweiten Seite zumindest abschnittsweise eine unterschiedlich große Breite aufweist.

Darüber hinaus betrifft die vorliegende Erfindung eine Seitentrocknungsvorrichtung für eine Fahrzeugbehandlungsanlage zum Beaufschlagen einer Seitenfläche eines zu trocknenden Fahrzeugs mit Trocknungsluft, umfassend eine Gebläseeinrichtung zum Bereitstellen eines Stromes von Trocknungsluft, eine Luftführungseinrichtung und eine Düseneinrichtung.

Ferner betrifft die vorliegende Erfindung eine Fahrzeugbehandlungsanlage, insbesondere eine Fahrzeugwaschanlage mit einer Seitentrocknungsvorrichtung.

Eine Seitentrocknungsvorrichtung mit Düseneinrichtung der vorstehend beschriebenen Art kommt zum Beispiel in einer Fahrzeugwaschanlage zum Einsatz, um sich auf dem Fahrzeug befindende Flüssigkeit abzublasen und dadurch das Fahrzeug zu trocknen. Die Seitentrocknungsvorrichtung ist zum Beispiel an einem seitlichen Träger der Fahrzeugwaschanlage angeordnet, relativ zu dem das Fahrzeug bewegt ist. Hierbei kann es sich um eine Fahrzeugwaschanlage vom Portaltyp handeln, bei dem ein Waschportal relativ zum Fahrzeug verfahren wird, oder um eine Waschstraße, bei der das Fahrzeug mittels einer Fördereinrichtung an einer stationären Seitentrocknungsvorrichtung vorbei bewegt wird.

Um die Seitenfläche des Fahrzeugs soweit wie möglich erfassen zu können, ist die Auslassöffnung der Düseneinrichtung schlitzförmig ausgebildet und kann sich im bestimmungsgemäßen Gebrauch der Seitentrocknungsvorrichtung insbesondere in einer Höhenrichtung erstrecken, zum Beispiel vertikal. Aufgrund unterschiedlich großer Fahrzeuge und einer Fahrzeuggeometrie, die beispielsweise eine konkave Kontur aufweist, ist das Trocknungsergebnis jedoch in der Praxis nicht immer völlig zufriedenstellend. So können zum Beispiel untere Seitenflächenbereiche im Schwellerbereich nicht immer vollständig abgetrocknet werden.

Die DE 2 314 072 A1 bezieht sich auf eine Seitentrocknungsvorrichtung, deren Düseneinrichtung eine Auslassdüse mit einer in vertikaler Richtung schlitzförmigen Auslassöffnung umfasst. Die Düseneinrichtung weist ein höhenverstellbares Luftleitelement auf, welches entlang der schlitzförmigen Auslassöffnung von der ersten Seite zur zweiten Seite verschoben werden kann, um den Luftstrom in der Höhe zu lenken.

Weitere Seitentrocknungsvorrichtungen sind in der KR 10-0668439 B1 und US 2,874,485 beschrieben.

Aufgabe der vorliegenden Erfindung ist es, eine Düseneinrichtung der vorstehend beschriebenen Art, eine Seitentrocknungsvorrichtung mit einer Düseneinrichtung und eine Fahrzeugbehandlungsanlage mit einer Seitentrocknungsvorrichtung bereitzustellen, mit der ein besseres Trocknungsergebnis erzielt wird.

Diese Aufgabe wird bei einer gattungsgemäßen Düseneinrichtung erfindungsgemäß dadurch gelöst, dass die Breite der Auslassöffnung an der zweiten Seite größer ist als an der ersten Seite.

Bei der erfindungsgemäßen Düseneinrichtung strömt Trocknungsluft in einer Zuströmrichtung zu, wobei die erste Seite strömungsaufwärts an der Auslassdüse angeordnet ist und die zweite Seite strömungsabwärts. Die Auslassöffnung erstreckt sich von der ersten Seite zur zweiten Seite. Die Breite der Auslassöffnung kann insbesondere quer zur Erstreckungsrichtung der Auslassöffnung bestimmt werden. Bei der vorliegenden Erfindung weist die Auslassöffnung eine über die Erstreckung nicht-konstante Breite auf. Durch die zumindest abschnittsweise unterschiedliche Breite kann der Strom von Trocknungsluft gezielt beispielsweise an breiteren Abschnitten im Verhältnis zu Abschnitten verstärkt werden, die eine geringere Breite aufweisen. Dies bietet die Möglichkeit, die Seitenflächen des Fahrzeugs abschnittsweise mit einem größeren Volumenstrom an Trocknungsluft zu beaufschlagen, zum Beispiel für eine verbesserte Trocknung der Seitenflächenbereiche, insbesondere an unteren Bereichen des Fahrzeugs.

Die Breite der Auslassöffnung an der zweiten Seite ist größer als an der ersten Seite. Auf diese Weise kann der Volumenstrom an der zweiten Seite im Verhältnis zur ersten Seite größer sein. Die zweite Seite ist im bestimmungsgemäßen Gebrauch der Düseneinrichtung unten angeordnet, um untere Seitenflächenbereiche abzutrocknen.

Vorteilhaft kann es sein, wenn sich die Breite der Auslassöffnung von der ersten Seite zur zweiten Seite kontinuierlich vergrößert. Es zeigt sich, dass durch eine kontinuierliche Erweiterung ein besonders vorteilhaftes Trocknungsergebnis erzielt werden kann.

Vorgesehen sein kann, dass die Auslassöffnung an der ersten Seite ihre geringste Breite aufweist.

Alternativ oder ergänzend kann vorgesehen sein, dass die Auslassöffnung an der zweiten Seite ihre größte Breite aufweist.

Bei einer vorteilhaften Ausführungsform der Erfindung ist beispielsweise vorgesehen, dass ein Verhältnis der Breite der Auslassöffnung an der zweiten Seite zur Breite der Auslassöffnung an der ersten Seite ungefähr 1,2 bis 2,5 beträgt, vorzugsweise ungefähr 1,5 bis 2.

Bei einer vorteilhaften Ausführungsform der Erfindung kann vorgesehen sein, dass ein Verhältnis der Breite der Auslassöffnung an der zweiten Seite zur Länge der Auslassöffnung von der zweiten Seite zur ersten Seite ungefähr 0,25 bis 0,5 beträgt, vorzugsweise ungefähr 0,3 bis 0,4.

Bei einer vorteilhaften Ausführungsform der Erfindung kann vorgesehen sein, dass ein Verhältnis der Breite der Auslassöffnung an der ersten Seite zur Länge der Auslassöffnung von der zweiten Seite zur ersten Seite ungefähr 0,1 bis 0,4 beträgt, vorzugsweise ungefähr 0,2 bis 0,3.

Trocknungsluft, die der Auslassdüse zuströmt, tritt beispielsweise in einer Durchtrittsrichtung durch die Auslassöffnung hindurch.

Vorgesehen sein kann, dass die Auslassdüse in Richtung auf die Auslassöffnung, d. h. von der der Auslassöffnung in Strömungsrichtung vorgelagerten Seite, eine insbesondere kontinuierliche Verjüngung aufweist. Durch diese Verengung der Auslassdüse wird die Trocknungsluft auf die Auslassöffnung hin beschleunigt, was zu einem verbesserten Trocknungsergebnis führt.

Die Auslassdüse kann beispielsweise in sich symmetrisch ausgestaltet bezüglich einer Symmetrieebene senkrecht zu einer Ebene der Auslassöffnung sein.

Günstig ist es, wenn die Düseneinrichtung mindestens einen Anlageabschnitt zum Anliegen an einem Haltekörper der Seitentrocknungsvorrichtung umfasst und einen die Auslassöffnung umfassenden und vom Anlageabschnitt in Strömungsrichtung der durch die Auslassöffnung ausströmenden Trocknungsluft abstehenden Auslassabschnitt. Dies ermöglicht zum Beispiel eine konstruktiv einfache Fertigung der Düseneinrichtung, insbesondere der Auslassdüse. Beispielsweise ist der Anlageabschnitt als Rand des Auslassabschnittes gebildet und kann dadurch konstruktiv einfach an dem Haltekörper, der zum Beispiel eine Luftführungseinrichtung umfasst oder bildet, befestigt werden. Der Auslassabschnitt verjüngt sich zum Beispiel wie vorstehend erläutert und umfasst die Auslassöffnung.

Vorzugsweise sind zwei im Abstand zueinander angeordnete Anlageabschnitte vorgesehen, die über einen von Trocknungsluft durchströmbaren Zwischenraum voneinander getrennt sind. Der Haltekörper umfasst zum Beispiel eine Austrittsöffnung eines Luftkanals, die von der Düseneinrichtung überdeckt ist, wobei der Zwischenraum mit der Austrittsöffnung fluchtet und beide von der Trocknungsluft durchströmt werden können.

Eine Ebene der Auslassöffnung ist beispielsweise parallel zu einer vom mindestens einen Anlageabschnitt definierten Ebene ausgerichtet.

Günstigerweise ist der mindestens eine Anlageabschnitt planar ausgestaltet zum flanschartigen Anlegen der Auslassdüse am Haltekörper.

Am mindestens einen Anlageabschnitt sind vorteilhafterweise Durchgangsöffnungen gebildet. Verbindungselemente, beispielsweise Schrauben oder Nieten, erlauben dadurch eine Befestigung der Düseneinrichtung am Haltekörper. Ferner können Durchlassöffnungen zum Beispiel an Positionen angeordnet sein, an denen der Haltekörper seinerseits Verbindungselemente (beispielsweise Nieten) umfasst, über die Luftleitelemente und/oder Kanalwände eines Luftkanals fixiert sind. Die Durchgangsöffnungen können vorteilhafterweise zumindest zum Teil äquidistant zueinander angeordnet sein.

Die Auslassdüse kann bei einer bevorzugten Ausführungsform an der ersten Seite und/oder an der zweiten Seite ein schräg zu einer Ebene der Auslassöffnung verlaufendes Luftführungselement umfassen oder bilden. Im bestimmungsgemäßen Gebrauch ist das mindestens eine Luftführungselement zum Beispiel so gebildet und ausgerichtet, dass die Trocknungsluft an der ersten Seite und/oder an der zweiten Seite nach unten geleitet wird. Dies kann beispielsweise durch einen schräg nach unten gerichteten Abschnitt der Auslassdüse erzielt werden.

Die Auslassdüse und/oder die Düseneinrichtung können einstückig ausgebildet sein.

Die Auslassdüse und/oder die Düseneinrichtung können aus einem Metallmaterial gefertigt sein.

Wie bereits erwähnt, betrifft die vorliegende Erfindung auch eine Seitentrocknungsvorrichtung.

Eine die eingangs genannte Aufgabe lösende erfindungsgemäße Seitentrocknungsvorrichtung für eine Fahrzeugwaschanlage zum Beaufschlagen einer Seitenfläche eines zu trocknenden Fahrzeugs mit Trocknungsluft umfasst:
- eine Gebläseeinrichtung zum Bereitstellen eines Stromes von Trocknungsluft;
- eine Luftführungseinrichtung;
- eine Düseneinrichtung der vorstehend beschriebenen Art, der Trocknungsluft über die Luftführungseinrichtung zuführbar ist.

Vorteile, die bereits im Zusammenhang mit der Erläuterung der erfindungsgemäßen Düseneinrichtung erwähnt wurden, können bei der erfindungsgemäßen Seitentrocknungsvorrichtung ebenfalls erzielt werden. Vorteilhafte Ausführungsformen der Seitentrocknungsvorrichtung ergeben sich durch vorteilhafte Ausführungsformen der erfindungsgemäßen Düseneinrichtung.

Die Luftführungseinrichtung ist vorzugsweise ein Hohlkörper oder umfasst einen Hohlkörper, an dem ein Gebläsegehäuse der Gebläseeinrichtung festgelegt ist und der eine Eintrittsöffnung für Trocknungsluft umfasst oder bildet, der eine Austrittsöffnung umfasst oder bildet, in der die Düseneinrichtung angeordnet ist, und der einen von der Eintrittsöffnung zur Austrittsöffnung verlaufenden Luftkanal umfasst oder bildet. Die Gebläseeinrichtung stellt Trocknungsluft bereit, die über die Eintrittsöffnung in den Luftkanal eintreten und über die Austrittsöffnung, die zum Beispiel mit dem vorstehend erwähnten Zwischenraum fluchtet, aus dem Luftkanal austreten und in die Düseneinrichtung eintreten kann.

Als besonders vorteilhaft kann es sich erweisen, wenn der Hohlkörper durch einen in Höhenrichtung erstreckten Träger einer die Seitentrocknungsvorrichtung umfassenden Fahrzeugbehandlungsanlage ausgebildet ist. Auf diese Weise kann der Träger, an dem weitere Aggregate der Fahrzeugbehandlungsanlage angeordnet sind oder der ein strukturelles Bauteil der Fahrzeugbehandlungsanlage darstellt, eine weitere Funktion ausüben. Der Träger kann insbesondere eine Portalsäule einer Portalwaschanlage sein, die die Luftführungseinrichtung bildet.

Die Düseneinrichtung kann insbesondere durch Verschraubung an einem Rand der Austrittsöffnung festgelegt sein. Beispielsweise liegt an dem Rand der mindestens eine Anlageabschnitt an.

Der Hohlkörper, beispielsweise der Träger, umfasst zum Beispiel eine erste Kanalwand und eine im Abstand zur ersten Kanalwand angeordnete zweite Kanalwand. Die erste Kanalwand und die zweite Kanalwand können den Luftkanal an einander gegenüberliegenden Seiten begrenzen und können zum Beispiel parallel zueinander ausgerichtet sein.

Die Eintrittsöffnung kann zum Beispiel in der ersten Kanalwand gebildet sein, wobei das Gebläsegehäuse an einer dem Luftkanal abgewandten Außenseite mit dem Hohlkörper verbunden ist. Beispielsweise ist das Gebläsegehäuse durch Verschraubung am Hohlkörper festgelegt.

Die Austrittsöffnung ist beispielsweise in einer die erste Kanalwand und die zweite Kanalwand miteinander verbindenden Verbindungswand gebildet. Die Verbindungswand und die erste Kanalwand können unterschiedliche Kanalwände des Luftkanals sein oder alternativ dieselbe Kanalwand. Bei einer vorteilhaften Ausführungsform sind die erste Kanalwand und die Verbindungswand zum Beispiel im Winkel zueinander angeordnet (insbesondere 90°), wobei die erste Kanalwand eine hintere Wand oder vordere Wand des Trägers ist, insbesondere der Portalsäule. Die Verbindungswand ist beispielsweise der Aufstellfläche für das Fahrzeug zugewandt.

Vorgesehen sein kann, dass die Austrittsöffnung in der Verbindungswand weniger breit ist als ein Abstand der ersten Kanalwand und der zweiten Kanalwand voneinander, so dass in Strömungsrichtung seitlich neben der Austrittsöffnung an der Verbindungswand eine Prallfläche für Trocknungsluft gebildet ist. Dies kann sich zum Beispiel als vorteilhaft für die Strömung der Trocknungsluft erweisen, da eine größere Querschnittsfläche zur Verfügung steht. Dadurch entsteht eine geringere Reibung, und der Druckverlust ist vermindert, was vorteilhaft für das Trocknungsergebnis ist. Die Prallfläche erstreckt sich bevorzugt mindestens über die gesamte Länge der Austrittsöffnung und/oder der Düseneinrichtung.

Der Luftkanal kann vorzugsweise in Verlaufsrichtung von der Eintrittsöffnung zur Austrittsöffnung mindestens eine Querschnittsverjüngung aufweisen. Die Querschnittsverjüngung ermöglicht eine Beschleunigung der Trocknungsluft und vorzugsweise ein besseres Trocknungsergebnis.

Der Querschnitt des Luftkanals ist vorzugsweise an der zweiten Seite der Auslassdüse minimal.

Vorgesehen sein kann zum Beispiel, dass der Luftkanal in Strömungsrichtung der Trocknungsluft der Düseneinrichtung vorgelagert mindestens eine Querschnittsverjüngung aufweist.

Alternativ oder ergänzend kann zum Beispiel vorgesehen sein, dass der Luftkanal in Strömungsrichtung der Trocknungsluft auf Höhe der Düseneinrichtung zwischen der ersten Seite und der zweiten Seite mindestens eine Querschnittsverjüngung aufweist.

Der Querschnitt des Luftkanals kann abschnittsweise konstant sein.

Eine Querschnittsverjüngung wird zum Beispiel durch eine schräg verlaufende Kanalwand des Luftkanals erzielt, wobei die Kanalwand zum Beispiel zumindest abschnittsweise schräg zur Verbindungswand ausgerichtet sein kann.

Die Querschnittsverjüngung des Luftkanals kann bei einer bevorzugen Ausführungsform durch eine Verschmälerung des Luftkanals in nur einer Raumrichtung gebildet sein, wohingegen der Luftkanal in einer zweiten Raumrichtung, die senkrecht zur ersten Raumrichtung ausgerichtet ist, keine Verschmälerung aufweist. Beispielsweise weist der Luftkanal keine Verschmälerung zwischen der vorstehend genannten ersten Kanalwand und zweiten Kanalwand auf, die parallel zueinander verlaufen.

Der Hohlkörper umfasst beispielsweise eine die erste Kanalwand und die zweite Kanalwand miteinander verbindende Luftführungswand. Die Luftführungswand liegt zum Beispiel der vorstehend genannten Verbindungswand gegenüber.

Die Verjüngung des Querschnitts des Luftkanals kann zum Beispiel allein durch den Verlauf der Luftführungswand definiert sein.

Wie bereits erwähnt, betrifft die vorliegende Erfindung auch eine Fahrzeugbehandlungsanlage.

Eine erfindungsgemäße, die eingangs genannte Aufgabe lösende Fahrzeugbehandlungsanlage umfasst mindestens eine Seitentrocknungsvorrichtung der vorstehend beschriebenen Art und eine Aufstellfläche für ein Fahrzeug, wobei die Düseneinrichtung seitlich neben der Aufstellfläche positioniert ist und aus der Auslassdüse austretende Trocknungsluft auf eine Seitenfläche des Fahrzeugs gerichtet ist.

Als "Aufstellfläche" kann im vorliegenden Fall ein Waschplatz einer Portalbehandlungsanlage angesehen werden. "Aufstellfläche" kann für den Fall einer straßenartigen Fahrzeugbehandlungsanlage, insbesondere einer Waschstraße, diejenige Fläche bezeichnen, entlang der das Fahrzeug an der Seitentrocknungsvorrichtung vorbei bewegt wird.

Die im Zusammenhang mit der erfindungsgemäßen Düseneinrichtung und der erfindungsgemäßen Seitentrocknungsvorrichtung erwähnten Vorteile können bei der erfindungsgemäßen Fahrzeugbehandlungsanlage ebenfalls erzielt werden. Vorteilhafte Ausführungsformen der erfindungsgemäßen Fahrzeugbehandlungsanlage ergeben sich durch vorteilhafte Ausführungsformen der erfindungsgemä-ßen Düseneinrichtungen der erfindungsgemäßen Seitentrocknungsvorrichtung. Auf obige Ausführungen wird verwiesen.

Die Fahrzeugbehandlungsanlage ist insbesondere eine Fahrzeugwaschanlage und kann vorteilhafterweise mindestens ein Reinigungsaggregat umfassen. Als Reinigungsaggregate sind zum Beispiel eine Sprüheinrichtung für eine Reinigungsflüssigkeit und mindestens eine Waschbürste vorgesehen.

Die Düseneinrichtung ist vorteilhafterweise so an der Fahrzeugbehandlungsanlage angeordnet, dass die Auslassöffnung in einer Höhenrichtung verläuft, insbesondere vertikal. Von der Seite kann Trocknungsluft in Richtung auf das Fahrzeug auftreten und Seitenflächen trocknen.

Die Gebläseeinrichtung ist vorteilhafterweise oberhalb der Düseneinrichtung angeordnet.

Beispielsweise ist die Gebläseeinrichtung bezogen auf eine Einfahrrichtung oder Fördereinrichtung an einer hinteren Wand des Hohlkörpers positioniert.

Der Hohlkörper kann ein Träger der Fahrzeugbehandlungsanlage sein, insbesondere eine Portalsäule einer Portalanlage.

In dem den Hohlkörper bildenden Träger, insbesondere der Portalsäule, ist bei einer bevorzugten Ausführungsform eine Trennwand angeordnet. Die Trennwand ist zum Beispiel die vorstehend genannte zweite Kanalwand. Die vorstehend erste Kanalwand kann zum Beispiel eine hintere oder vordere Wand des Trägers sein.

Die Trennwand ist günstigerweise mit zwei einander gegenüberliegenden Seitenwänden des Trägers jeweils über Verbindungselemente verbunden. Die Verbindungselemente können zum Beispiel Nieten sein. Die Trennwand bildet vorzugsweise eine Kanalwand des Luftkanals aus.

Die Verbindungselemente sind an einer der Aufstellfläche zugewandten Seite des Trägers und/oder an einer der Aufstellfläche abgewandten Seite des Trägers vorzugsweise gleichmäßig voneinander beabstandet.

Die vorstehend genannte Luftführungswand kann zum Beispiel in dem den Hohlkörper bildenden Träger, insbesondere der Portalsäule, angeordnet sein. Die Luftführungswand ist beispielsweise mit der Trennwand und einer weiteren Wand des Trägers, zum Beispiel einer hinteren oder vorderen Wand, über Verbindungselemente verbunden. Die Verbindungselemente können zum Beispiel Nieten sein.

Der Träger kann zum Beispiel einen unteren Trägerabschnitt aufweisen, der einen Fahrfuß zum Verfahren längs der Aufstellfläche umfasst und einen diesbezüglichen Antrieb umfassen kann. Der untere Trägerabschnitt ist der Aufstellfläche zugewandt.

Der Träger kann ferner einen oberen Trägerabschnitt umfassen, der auf dem unteren Trägerabschnitt aufsteht und mit diesem an einer Trennstelle über Verbindungselemente verbunden ist. Die Seitentrocknungsvorrichtung ist vorzugsweise am oberen Trägerabschnitt angeordnet, wobei die Düseneinrichtung und der Luftkanal oberhalb der Trennstelle positioniert sind.

Die Fahrzeugbehandlungsanlage kann eine Portalanlage ein, insbesondere eine Portalwaschanlage.

Die nachfolgende Beschreibung bevorzugter Ausführungsformen der Erfindung dient im Zusammenhang mit der Zeichnung der näheren Erläuterung der Erfindung. Es zeigen:
Figur 1: eine schematische Darstellung einer erfindungsgemäßen Fahrzeugbehandlungsanlage, die eine erfindungsgemäße Seitentrocknungsvorrichtung mit einer erfindungsgemäßen Düseneinrichtung umfasst;
Figur 2: eine perspektivische Darstellung eines Portals der Fahrzeugbehandlungsanlage aus Figur 1;
Figur 3: eine vergrößerte Detaildarstellung des Bereichs A in Figur 2, geschnitten;
Figur 4: eine Seitenansicht des Portals aus Figur 2 von links in Blickrichtung des Pfeiles "4", teilweise geschnitten;
Figur 5: eine Schnittansicht längs der Linie 5-5 in Figur 4;
Figur 6: eine vergrößerte Darstellung von Detail B in Figur 4; und
Figur 7: eine Seitenansicht der Düseneinrichtung in Figur 6, in Blickrichtung des Pfeiles "7".

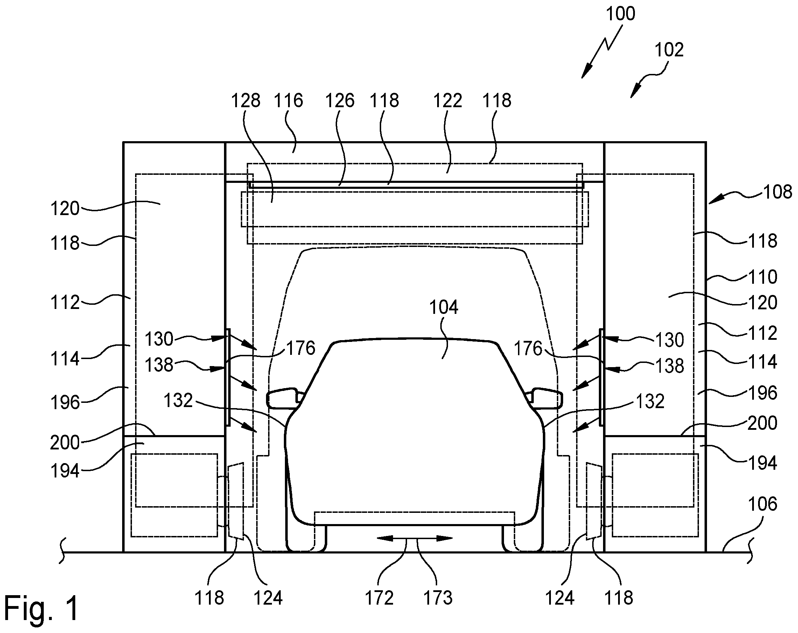

Figur 1 zeigt in schematischer Darstellung eine insgesamt mit dem Bezugszeichen 100 belegte vorteilhafte Ausführungsform der erfindungsgemäßen Fahrzeugbehandlungsanlage. Die Fahrzeugbehandlungsanlage 100 ist im vorliegenden Ausführungsbeispiel eine Fahrzeugwaschanlage 102, ausgestaltet als Portalwaschanlage, zum Reinigen eines Fahrzeugs 104.

Das Fahrzeug 104 ist während des Reinigungsvorgangs stationär auf einer Aufstellfläche 106 positioniert. Die Fahrzeugwaschanlage 102 ist relativ zum Fahrzeug 104 über die Aufstellfläche 106 mittels eines in der Zeichnung nicht gezeigten Antriebs verfahrbar.

Die Fahrzeugwaschanlage 102 umfasst als strukturelle Einrichtung zum Aufnehmen von Reinigungsaggregaten eine Trageinrichtung 108, ausgestaltet als Portal 110. Das Portal 110 weist zwei im Abstand zueinander angeordnete Träger 112 auf, die vorliegend senkrecht zur Aufstellfläche 106 ausgerichtet sind, insbesondere vertikal. Das Fahrzeug 104 ist im bestimmungsgemäßen Gebrauch der Fahrzeugwaschanlage 102 zwischen den Trägern 112 angeordnet.

Positions- und Orientierungsangaben wie beispielsweise "unten", "oben" oder dergleichen sind vorliegend auf einen bestimmungsgemäßen Gebrauch der Fahrzeugwaschanlage 102 bezogen, bei dem die Fahrzeugwaschanlage 102 auf der Aufstellfläche 106 aufsteht, die beispielhaft als horizontal ausgerichtet angesehen wird.

Die Träger 112 sind jeweilige Portalsäulen 114. Das Portal 110 umfasst ferner einen Querträger 116, über den die Träger 112 obenseitig miteinander verbunden sind.

Figur 1 zeigt schematisch Reinigungsaggregate 118 der Fahrzeugwaschanlage 102 in Gestalt von Seitenbürsten 120, einer Dachbürste 122, Radwaschbürsten 124 und einer Sprüheinrichtung 126 für Reinigungsflüssigkeit.

Zum Abtrocknen des Fahrzeugs 104 nach der Wäsche umfasst die Fahrzeugwaschanlage 102 eine Dachtrocknungseinrichtung 128. Über die Dachtrocknungseinrichtung 128 kann das Fahrzeug 104 obenseitig, an der Front und am Heck mit Trocknungsluft beaufschlagt werden.

Ferner umfasst die Fahrzeugwaschanlage 102 zwei Seitentrocknungsvorrichtungen 130, bei denen es sich um vorteilhafte Ausführungsformen der erfindungsgemäßen Seitentrocknungsvorrichtung handelt.

In funktioneller Hinsicht sind die Seitentrocknungsvorrichtungen 130 identisch ausgestaltet, wobei an jeder Portalsäule 114 eine Seitentrocknungsvorrichtung 130 angeordnet ist. Die Seitentrocknungsvorrichtungen 130 sind symmetrisch relativ zueinander bezüglich einer Mittellängsebene der Fahrzeugwaschanlage 102. Bezugnahmen auf eine Seitentrocknungsvorrichtung 130 gelten in entsprechender Weise für die jeweils andere Seitentrocknungsvorrichtung 130 in entsprechender Weise.

Über die Seitentrocknungsvorrichtungen 130 wird jeweils Trocknungsluft zum Abtrocknen von Seitenflächen 132 des Fahrzeugs 104 bereitgestellt. Die Trocknungsluft ist wie nachfolgend erläutert von der Portalsäule 114 auf die Seitenfläche 132 gerichtet. Durch Verfahren des Portals 110 relativ zum Fahrzeug 104 können die Seitenflächen 132 über die gesamte Fahrzeuglänge abgetrocknet werden.

Die Seitentrocknungsvorrichtung 130 umfasst eine Gebläseeinrichtung 134, eine Luftführungseinrichtung 136 und eine Düseneinrichtung 138, bei der es sich um eine bevorzugte Ausführungsform der erfindungsgemäßen Düseneinrichtung handelt.

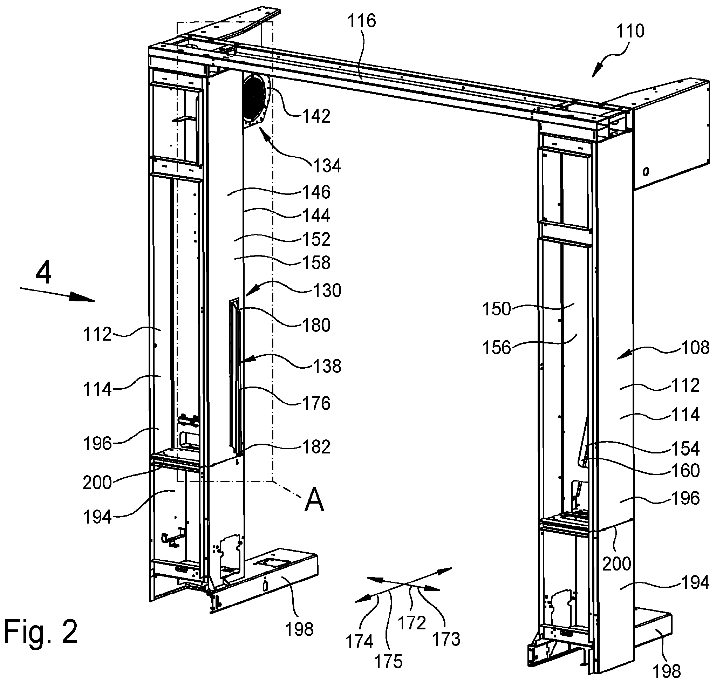

Trocknungsluft wird von der Gebläseeinrichtung 134 bereitgestellt, durchströmt einen von der Luftführungseinrichtung 136 gebildeten Luftkanal 140 und gelangt zur Düseneinrichtung 138 (Figuren 2 bis 5).

Die Gebläseeinrichtung 134 umfasst ein Gebläsegehäuse 142. Vorliegend ist das Gebläsegehäuse 142 an einer hinteren Wand 144 des Trägers 112 festgelegt. Beispielsweise liegt das Gebläsegehäuse 142 flanschartig an der hinteren Wand 144 an und ist mit dieser durch Verschraubung verbunden.

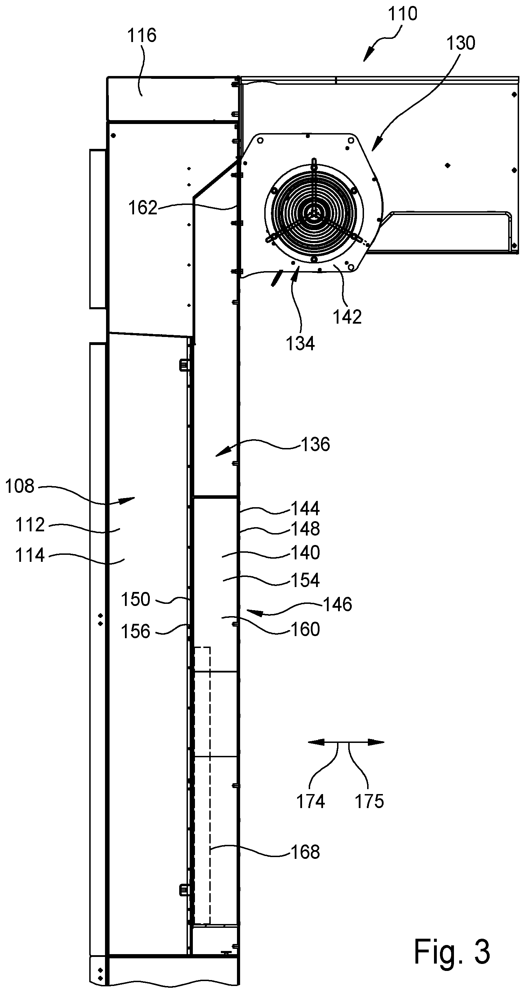

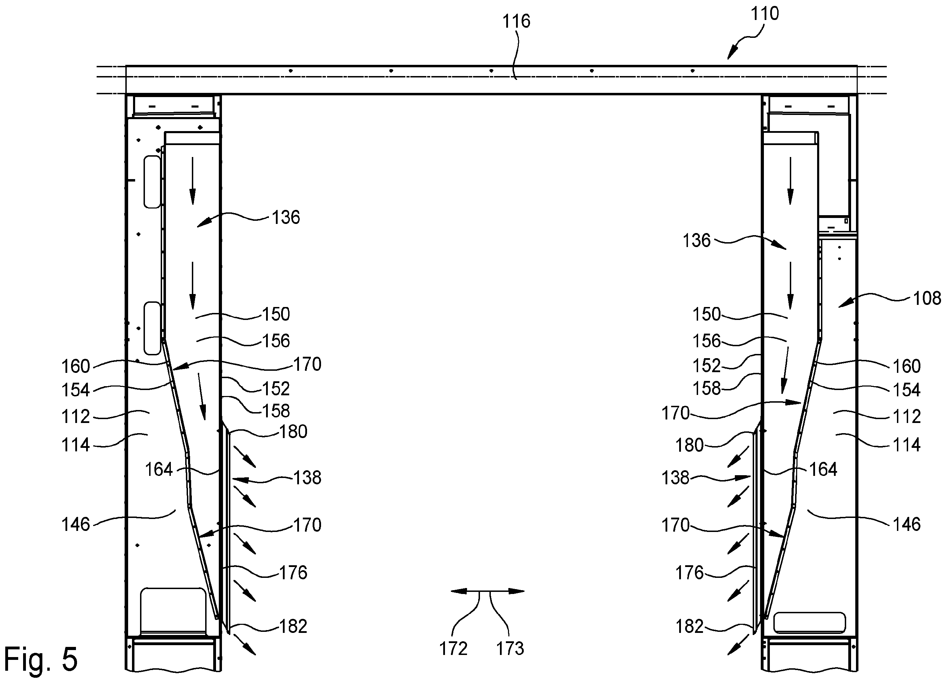

Wie insbesondere aus den Figuren 3 und 5 hervorgeht, wird der Luftkanal 140 vom Träger 112 ausgebildet, der im vorliegenden Beispiel ein Hohlkörper 146 ist. Der Luftkanal 140 umfasst zu diesem Zweck eine von der hinteren Wand 144 gebildete erste Kanalwand 148, eine zweite Kanalwand 150, eine dritte Kanalwand 152 und eine vierte Kanalwand 154.

Die zweite Kanalwand 150 wird durch eine innen im Träger 112 angeordnete Trennwand 156 gebildet. Die Kanalwände 148, 150 sind im Abstand zueinander angeordnet und im vorliegenden Beispiel insbesondere parallel zueinander ausgerichtet.

Innenseitig, der Aufstellfläche 106 zugewandt, sind die Kanalwände 148, 150 über eine Verbindungswand 158, die die dritte Kanalwand 152 ausbildet, miteinander verbunden. Die Verbindungswand 158 ist eine Außenwand des Trägers 112, die dem Fahrzeug 106 zugewandt ist.

Wie insbesondere aus Figur 5 hervorgeht, wird die vierte Kanalwand 154 durch eine Luftführungswand 160 ausgebildet. Die Luftführungswand 160 ist im Träger 112 angeordnet und verbindet die Kanalwände 148, 150 miteinander.

Der Luftkanal 140 kann im vorliegenden Fall als Flachkanal bezeichnet werden, dessen Kanalhöhe, definiert durch den Abstand der Kanalwände 148, 150 voneinander, deutlich geringer ist als dessen Kanallänge.

Benachbarte Kanalwände 148, 150, 152, 154 grenzen vorliegend jeweils senkrecht aneinander.

Der Luftkanal 140 erstreckt sich von einer Eintrittsöffnung 162 bis zu einer Austrittsöffnung 164. Die Eintrittsöffnung 162 ist vorliegend obenseitig am Träger 112 in der hinteren Wand 144 gebildet. Das Gebläsegehäuse 142 überdeckt die Eintrittsöffnung 162. Trocknungsluft wird über ein Gebläse, beispielsweise ein Radialgebläse, in den Luftkanal 140 hinein gefördert.

Die Austrittsöffnung 164 ist in der der Aufstellfläche 106 zugewandten Verbindungswand 158 gebildet. Die Austrittsöffnung 164 weist dadurch in Richtung des Fahrzeugs 104, insbesondere auf die Seitenfläche 132.

Im vorliegenden Fall ist die Austrittsöffnung 164 schlitzförmig und weist eine Breite auf, die erheblich geringer ist als eine Länge. Die Austrittsöffnung 164 ist in der Höhenrichtung und insbesondere vertikal ausgerichtet.

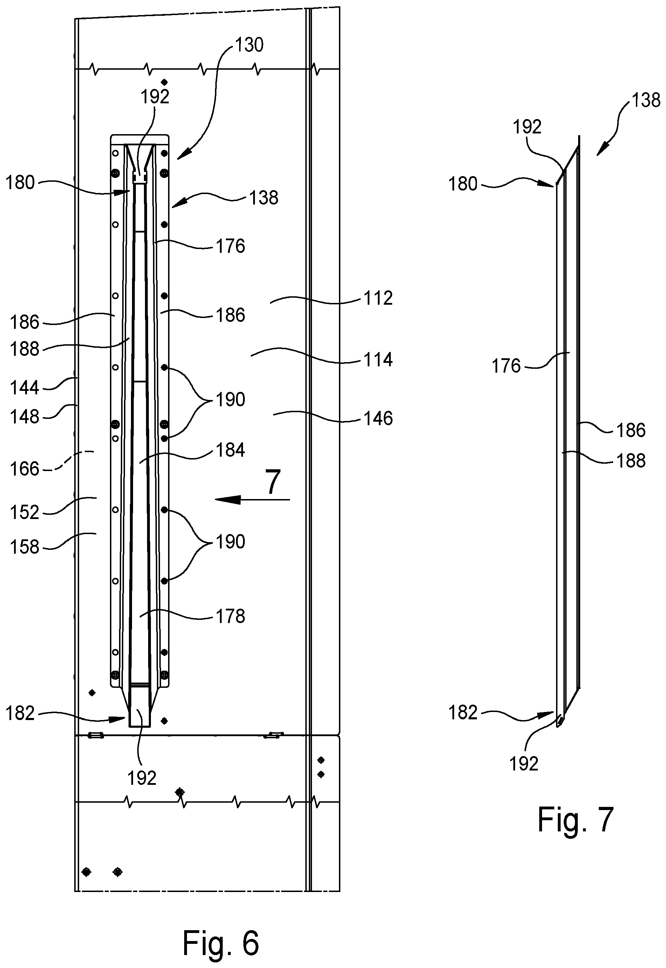

Eine Breite der Austrittsöffnung 164 ist geringer als der Abstand der Kanalwände 148, 150 voneinander. Seitlich neben der Austrittsöffnung 164 ist dadurch, vorliegend an der dritten Kanalwand 152, eine Prallfläche 166 für zuströmende Trocknungsluft gebildet (Figur 6). Das Vorsehen der Prallfläche 166 erweist sich vorliegend als vorteilhaft für die Strömung der Trocknungsluft, da eine größere Querschnittsfläche zur Verfügung steht. Dadurch entsteht eine geringere Reibung, und der Druckverlust ist vermindert, was vorteilhaft für das Trocknungsergebnis ist.

Vorgesehen sein kann insbesondere, dass die Austrittsöffnung 164 am Rand mit der zweiten Kanalwand 150 fluchtet. Figur 3 zeigt dies schematisch, wobei eine Kontur der Austrittsöffnung 164 mit einer gestrichelten Linie 168 gekennzeichnet ist.

Wie insbesondere aus den Figuren 3 und 5 deutlich wird, weist der Luftkanal 140 mindestens eine Querschnittsverjüngung 170 auf, vorliegend zwei Querschnittsverjüngungen 170.

Die Querschnittsverjüngungen 170 erfolgen vorliegend nur längs einer ersten Raumrichtung 172, wohingegen in einer zweiten Raumrichtung 174, die senkrecht zur ersten Raumrichtung 172 ausgerichtet ist, keine Verjüngung des Querschnitts vorliegt (Figuren 3 und 5). Die erste Raumrichtung 172 ist vorliegend eine Querrichtung 173 der Fahrzeugwaschanlage 102. Die zweite Raumrichtung 174 ist eine Längsrichtung 175, entlang derer die Einfahrtsrichtung für das Fahrzeug 104 ausgerichtet ist und entlang derer das Portal 110 auf der Aufstellfläche 106 verfahren werden kann.

Die Querschnittsverjüngungen 170 werden vorliegend allein durch den Verlauf der Luftführungswand 160 definiert.

Wie beispielsweise aus Figur 5 hervorgeht, weist der Luftkanal 140 ausgehend von der Eintrittsöffnung 162 zunächst einen konstanten Querschnitt auf. Der Düseneinrichtung 138 vorgelagert ist eine erste Querschnittsverjüngung 170 der schräg verlaufenden Luftführungswand 160 gebildet. Abschnittsweise weist der Luftkanal 140 über die Länge der Düseneinrichtung 138 nachfolgend einen konstanten Querschnitt auf. In Richtung auf das Ende des Luftkanals 140 und das untere Ende der Düseneinrichtung 138 ist eine zweite Querschnittsverjüngung 170 gebildet.

Die Trennwand 156 und/oder die Luftführungswand 160 können am Träger 112 beispielsweise mittels Verbindungselementen festgelegt sein. Denkbar ist insbesondere der Einsatz von Nieten. Diese Verbindungselemente sind in der Zeichnung nicht dargestellt. Als vorteilhaft kann es sich erweisen, wenn die Verbindungselemente äquidistant zueinander angeordnet sind.

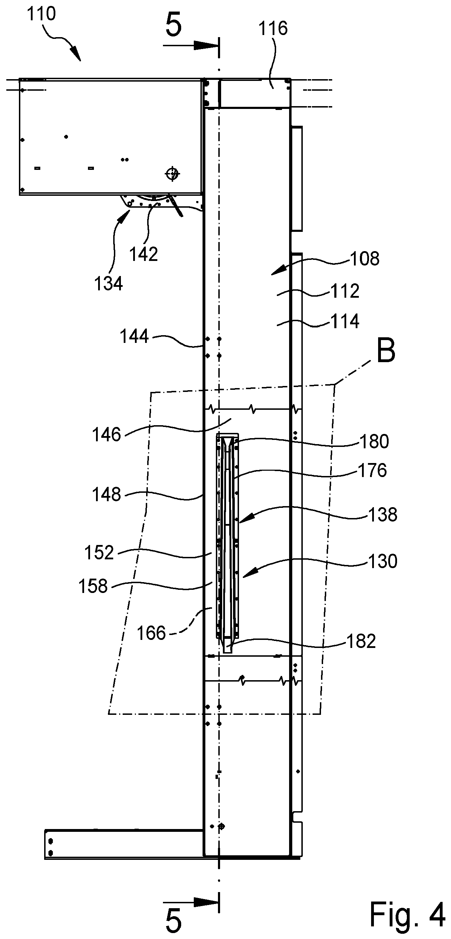

Nachfolgend wird unter Verweis insbesondere auf die Figuren 4 bis 7 auf die Ausgestaltung der erfindungsgemäßen Düseneinrichtung 138 eingegangen.

Die Düseneinrichtung 138 umfasst eine Auslassdüse 176, über die die Trocknungsluft austritt und auf die Seitenfläche des Fahrzeugs 104 geleitet wird.

Die Auslassdüse 176 ist längserstreckt gebildet und am Träger 112 in einer Höhenrichtung ausgerichtet, insbesondere in vertikaler Richtung. Die Auslassdüse 176 ist im vorliegenden Beispiel insbesondere eine Schlitzdüse, die eine schlitzförmige Auslassöffnung 178 umfasst, die ebenfalls in Höhenrichtung und insbesondere vertikal ausgerichtet ist.

Bezogen auf die Zuströmrichtung der Trocknungsluft durch den Luftkanal 140 erstreckt sich die Auslassöffnung 178 von einer ersten Seite 180 bis zu einer strömungsabwärts angeordneten zweiten Seite 182 der Auslassdüse 176. Die erste Seite 180 ist oben und die zweite Seite 182 unten an der Auslassdüse 176 angeordnet.

Die Auslassdüse 176 umfasst zwei in einem Abstand zueinander angeordnete und über einen Zwischenraum 184 voneinander getrennte Anlageabschnitte 186. Von den Anlageabschnitten 186 steht in Strömungsrichtung der Trocknungsluft ein Auslassabschnitt 188 ab, der die Auslassöffnung 178 bildet.

Die Auslassdüse 176 verjüngt sich in Richtung auf die Auslassöffnung 178, vorliegend insbesondere kontinuierlich. Quer zur Längsrichtung weist die Auslassdüse 176 zum Beispiel einen im Wesentlichen trapezförmigen Querschnitt des Auslassabschnitts 188 auf.

Die Auslassdüse 176 ist am Rand der Austrittsöffnung 164 festgelegt und so angeordnet, dass der Zwischenraum 184 mit der Austrittsöffnung 164 fluchtet.

Über die Anlageabschnitte 186 liegt die Auslassdüse 176 flanschartig am Träger 112, der einen Haltekörper der Seitentrocknungsvorrichtung 130 bildet, an der Verbindungswand 158 an. Die Verbindung erfolgt insbesondere durch Verschraubung. An den Anlageabschnitten 186 sind Durchgangsöffnungen 190 gebildet für Verbindungselemente, beispielsweise Schrauben.

Darüber hinaus sind Durchgangsöffnungen 190 an den Anlageabschnitten 186 vorgesehen, in die beispielsweise die Verbindungselemente für die Trennwand 156 eingreifen können. Diese Durchgangsöffnungen 190 sind beispielsweise äquidistant zueinander angeordnet.

Wie insbesondere aus Figur 6 weiter hervorgeht, weist die Auslassöffnung 178 über die Erstreckung von der ersten Seite 180 bis zur zweiten Seite 182 zumindest abschnittsweise eine unterschiedliche Breite auf. Die Breite der Auslassöffnung 178 ist dementsprechend über die Länge nicht-konstant.

Im vorliegenden Fall ist die Breite an der zweiten Seite 182 größer als an der ersten Seite 180. Insbesondere weist die Auslassöffnung 178 die größte Breite an der zweiten Seite 182 auf und die kleinste Breite an der ersten Seite 180. Von der ersten Seite 180 bis zur zweiten Seite 182 vergrößert sich die Breite kontinuierlich.

Vorstehende Ausgestaltung der Auslassdüse 176 bietet den Vorteil, dass mehr Trocknungsluft als bei herkömmlichen Auslassdüsen unten an der Auslassdüse 176 austreten kann. Der Volumenstrom, der auf untere Seitenflächenbereiche der Fahrzeuge 104 gerichtet ist, ist dadurch gesteigert. Dies ermöglicht es, ein besseres Trocknungsergebnis speziell an unteren Seitenflächenbereichen zu erzielen.

Im vorliegenden Beispiel ist ein Verhältnis der Breite an der zweiten Seite 182 zur Breite an der ersten Seite 180 ungefähr 1,7. Ein Verhältnis der Breite an der zweiten Seite zur Länge der Auslassöffnung 178 von der zweiten Seite 182 zur ersten Seite 180 beträgt ungefähr 0,35. Ein Verhältnis der Breite der Auslassöffnung 178 an der ersten Seite zur Länge der Auslassöffnung 178 beträgt vorliegend ungefähr 0,25.

Die Auslassdüse 176 umfasst ferner mindestens ein schräg zur Ebene der Auslassöffnung 178 verlaufendes Luftführungselement 192. Vorliegend ist ein Luftführungselement 192 obenseitig und ein weiteres Luftführungselement 192 untenseitig an der Auslassdüse 176 angeordnet. Über die Luftführungselemente 192 wird die Trocknungsluft schräg nach unten geleitet (Figur 5). Dies ist vorteilhaft für ein verbessertes Trocknungsergebnis.

Oberhalb der Düse 176 angeordnete Bereiche des Fahrzeugs 104 an den Seitenflächen 132 können zum Beispiel über die Dachtrocknungseinrichtung 128 erfasst und abgetrocknet werden.

Aus der Zeichnung geht weiter hervor, dass die Träger 112 jeweils einen unteren Trägerabschnitt 194 und einen oberen Trägerabschnitt 196 umfassen. Der untere Trägerabschnitt 194 umfasst einen Fahrfuß 198 des Portals. Die Seitentrocknungsvorrichtung 130 ist vollständig am oberen Trägerabschnitt 196 angeordnet. Die Düseneinrichtung 138 ist oberhalb einer Trennstelle 200 zwischen den Trägerabschnitten 194, 196 positioniert.

### Bezugszeichenliste

- 100: Fahrzeugbehandlungsanlage
- 102: Fahrzeugwaschanlage
- 104: Fahrzeug
- 106: Aufstellfläche
- 108: Trageinrichtung
- 110: Portal
- 112: Träger
- 114: Portalsäule
- 116: Querträger
- 118: Reinigungsaggregat
- 120: Seitenbürste
- 122: Dachbürste
- 124: Radwaschbürste
- 126: Sprüheinrichtung
- 128: Dachtrocknungseinrichtung
- 130: Seitentrocknungsvorrichtung
- 132: Seitenfläche
- 134: Gebläseeinrichtung
- 136: Luftführungseinrichtung
- 138: Düseneinrichtung
- 140: Luftkanal
- 142: Gebläsegehäuse
- 144: hintere Wand
- 146: Hohlkörper
- 148, 150, 152, 154: Kanalwand
- 156: Trennwand
- 158: Verbindungswand
- 160: Luftführungswand
- 162: Eintrittsöffnung
- 164: Austrittsöffnung
- 166: Prallfläche
- 168: gestrichelte Linie
- 170: Querschnittsverjüngung
- 172: erste Raumrichtung
- 173: Querrichtung
- 174: zweite Raumrichtung
- 175: Längsrichtung
- 176: Auslassdüse
- 178: Auslassöffnung
- 180: erste Seite
- 182: zweite Seite
- 184: Zwischenraum
- 186: Anlageabschnitt
- 188: Auslassabschnitt
- 190: Durchgangsöffnung
- 192: Luftführungselement
- 194: unterer Trägerabschnitt
- 196: oberer Trägerabschnitt
- 198: Fahrfuß
- 200: Trennstelle

## Patentansprüche

1. Düseneinrichtung (138) für eine Seitentrocknungsvorrichtung (130) einer Fahrzeugbehandlungsanlage (100), welche Düseneinrichtung (138) mit in einer Zuströmrichtung einströmenden Trocknungsluft beaufschlagbar ist und eine Auslassdüse (176) umfasst oder bildet, die eine schlitzförmige Auslassöffnung (178) umfasst, die sich von einer in der Zuströmrichtung ersten Seite (180) der Auslassdüse (176) zu einer strömungsabwärts gelegenen zweiten Seite (182) der Auslassdüse (176) erstreckt, wobei im bestimmungsgemäßen Gebrauch der Düseneinrichtung (138) die erste Seite (180) oben und die zweite Seite (182) unten an der Auslassdüse (176) angeordnet ist und die Auslassöffnung (178) über ihre Erstreckung von der ersten Seite (180) in Richtung der zweiten Seite (182) zumindest abschnittsweise eine unterschiedlich große Breite aufweist, **dadurch gekennzeichnet,**
**dass** die Breite der Auslassöffnung (178) an der zweiten Seite (182) größer ist als an der ersten Seite (180).

2. Düseneinrichtung (138) nach Anspruch 1, **dadurch gekennzeichnet, dass** sich die Breite der Auslassöffnung (178) von der ersten Seite (180) zur zweiten Seite (182) kontinuierlich vergrößert.

3. Düseneinrichtung (138) nach Anspruch 1 oder 2, **dadurch gekennzeichnet, dass** die Auslassöffnung (178) an der ersten Seite (180) ihre geringste Breite aufweist und/oder dass die Auslassöffnung (178) an der zweiten Seite (182) ihre größte Breite aufweist.

4. Düseneinrichtung (138) nach einem der voranstehenden Ansprüche,
**dadurch gekennzeichnet, dass** zumindest eines der Folgenden gilt:
- ein Verhältnis der Breite der Auslassöffnung (178) an der zweiten Seite (182) zur Breite der Auslassöffnung (178) an der ersten Seite (180) beträgt ungefähr 1,2 bis 2,5, vorzugsweise ungefähr 1,5 bis 2;
- ein Verhältnis der Breite der Auslassöffnung (178) an der zweiten Seite (182) zur Länge der Auslassöffnung (178) von der zweiten Seite (182) zur ersten Seite (180) beträgt ungefähr 0,25 bis 0,5, vorzugsweise ungefähr 0,3 bis 0,4;
- ein Verhältnis der Breite der Auslassöffnung (178) an der ersten Seite (180) zur Länge der Auslassöffnung (178) von der zweiten Seite (182) zur ersten Seite (180) beträgt ungefähr 0,1 bis 0,4, vorzugsweise ungefähr 0,2 bis 0,3.

5. Düseneinrichtung (138) nach einem der voranstehenden Ansprüche, **dadurch gekennzeichnet, dass** die Auslassdüse (176) in Richtung auf die Auslassöffnung (178) eine insbesondere kontinuierliche Verjüngung aufweist und/oder dass die Düseneinrichtung (138) mindestens einen Anlageabschnitt (186) zum Anliegen an einem Haltekörper der Seitentrocknungsvorrichtung (130) umfasst und einen die Auslassöffnung (178) umfassenden und vom Anlageabschnitt (186) in Strömungsrichtung der durch die Auslassöffnung (178) ausströmenden Trocknungsluft abstehenden Auslassabschnitt (188), vorzugsweise dass zwei im Abstand zueinander angeordnete Anlageabschnitte (186) vorgesehen sind, die über einen von Trocknungsluft durchströmbaren Zwischenraum (184) voneinander getrennt sind.

6. Düseneinrichtung (138) nach Anspruch 5, **dadurch gekennzeichnet, dass** der mindestens eine Anlageabschnitt (186) planar ausgestaltet ist zum flanschartigen Anlegen der Auslassdüse (176) am Haltekörper und/oder dass am mindestens einen Anlageabschnitt (186) insbesondere äquidistant zueinander positionierte Durchgangsöffnungen (190) gebildet.

7. Seitentrocknungsvorrichtung (130) für eine Fahrzeugbehandlungsanlage (100) zum Beaufschlagen einer Seitenfläche (132) eines zu trocknenden Fahrzeugs (104) mit Trocknungsluft, umfassend:
- eine Gebläseeinrichtung (134) zum Bereitstellen eines Stromes von Trocknungsluft;
- eine Luftführungseinrichtung (136);
- eine Düseneinrichtung (138) nach einem der Ansprüche 1 bis 6, der Trocknungsluft über die Luftführungseinrichtung (136) zuführbar ist.

8. Seitentrocknungsvorrichtung (130) nach Anspruch 7, **dadurch gekennzeichnet, dass** die Luftführungseinrichtung (136) ein Hohlkörper (146) ist oder einen Hohlkörper (146) umfasst, an dem ein Gebläsegehäuse (142) der Gebläseeinrichtung (134) festgelegt und der eine Eintrittsöffnung (162) für Trocknungsluft umfasst oder bildet, der eine Austrittsöffnung (164) umfasst oder bildet, an der die Düseneinrichtung (138) angeordnet ist, und der einen von der Eintrittsöffnung (162) zur Austrittsöffnung (164) verlaufenden Luftkanal (140) umfasst der bildet, wobei der Hohlkörper (146) vorzugsweise durch einen in Höhenrichtung erstreckten Träger (112) einer die Seitentrocknungsvorrichtung (130) umfassenden Fahrzeugbehandlungsanlage (100) ausgebildet ist, insbesondere durch eine Portalsäule (114) einer Portalwaschanlage.

9. Seitentrocknungsvorrichtung (130) nach Anspruch 7 oder 8, **dadurch gekennzeichnet, dass** zumindest eines der Folgenden gilt:
- die Düseneinrichtung (138) ist an einem Rand der Austrittsöffnung (164) festgelegt, insbesondere durch Verschraubung;
- der Hohlkörper (146) umfasst eine erste Kanalwand (148) und eine im Abstand, insbesondere parallel, zur ersten Kanalwand (148) angeordnete zweite Kanalwand (150), die den Luftkanal (140) an einander gegenüberliegenden Seiten begrenzen.

10. Seitentrocknungsvorrichtung (130) nach Anspruch 9, **dadurch gekennzeichnet, dass** die Eintrittsöffnung (162) in der ersten Kanalwand (148) gebildet ist, und dass das Gebläsegehäuse (142) an einer dem Luftkanal (140) abgewandten Außenseite mit dem Hohlkörper (146) verbunden ist, insbesondere durch Verschraubung.

11. Seitentrocknungsvorrichtung (130) nach Anspruch 9 oder 10, **dadurch gekennzeichnet, dass** die Austrittsöffnung (164) in einer die erste Kanalwand (148) und die zweite Kanalwand (150) miteinander verbindenden Verbindungswand (158) gebildet ist, insbesondere dass die Austrittsöffnung (164) weniger breit ist als ein Abstand der ersten Kanalwand (148) und der zweiten Kanalwand (150) voneinander, so dass in Strömungsrichtung der Trocknungsluft seitlich neben der Austrittsöffnung (164) an der Verbindungswand (158) eine Prallfläche (166) für Trocknungsluft gebildet ist.

12. Seitentrocknungsvorrichtung (130) nach einem der Ansprüche 7 bis 11, **dadurch gekennzeichnet, dass** der Luftkanal (140) in Verlaufsrichtung von der Eintrittsöffnung (162) zur Austrittsöffnung (164) mindestens eine Querschnittsverjüngung (170) aufweist, wobei der Querschnitt des Luftkanals (140) an der zweiten Seite (182) der Auslassdüse (176) vorzugsweise minimal ist.

13. Seitentrocknungsvorrichtung (130) nach Anspruch 12, **dadurch gekennzeichnet, dass** der Luftkanal (140) in Strömungsrichtung der Trocknungsluft der Düseneinrichtung (138) vorgelagert mindestens eine Querschnittsverjüngung (170) aufweist und/oder dass der Luftkanal (140) in Strömungsrichtung der Trocknungsluft auf Höhe der Düseneinrichtung (138) zwischen der ersten Seite (180) und der zweiten Seite (182) mindestens eine Querschnittsverjüngung (170) aufweist.

14. Seitentrocknungsvorrichtung (130) nach Anspruch 12 oder 13, **dadurch gekennzeichnet, dass** zumindest eines der Folgenden gilt:
- die Querschnittsverjüngung (170) des Luftkanals (140) ist durch eine Verschmälerung des Luftkanals (140) in nur einer ersten Raumrichtung (172) gebildet, wohingegen der Luftkanal (140) in einer zweiten Raumrichtung (174), die senkrecht zur ersten Raumrichtung (172) ausgerichtet ist, keine Verschmälerung aufweist;
- der Hohlkörper (146) umfasst eine die erste Kanalwand (148) und die zweite Kanalwand (150) miteinander verbindende Luftführungswand (160), wobei die Verjüngung des Querschnitts des Luftkanals (140) allein durch den Verlauf der Luftführungswand (160) definiert ist.

15. Fahrzeugbehandlungsanlage (100), insbesondere Fahrzeugwaschanlage (102), vorzugsweise ausgestaltet als Portalanlage, insbesondere Portalwaschanlage, umfassend mindestens eine Seitentrocknungsvorrichtung (130) nach einem der Ansprüche 7 bis 14 und eine Aufstellfläche (106) für ein Fahrzeug (104), wobei die Düseneinrichtung (138) seitlich neben der Aufstellfläche (106) positioniert ist und aus der Auslassdüse (176) austretende Trocknungsluft auf eine Seitenfläche (132) des Fahrzeugs (104) gerichtet ist.

16. Fahrzeugbehandlungsanlage (100) nach Anspruch 15, insbesondere in Verbindung mit Anspruch 8, **dadurch gekennzeichnet, dass** in dem den Hohlkörper (146) bildenden Träger (112), insbesondere der Portalsäule (114), eine Trennwand (156) angeordnet ist, die mit zwei einander gegenüberliegenden Seitenwänden des Trägers (112) jeweils über Verbindungselemente, insbesondere Nieten, verbunden ist und eine Kanalwand (148, 150, 152, 154) des Luftkanals (140) ausbildet.

17. Fahrzeugbehandlungsanlage (100) nach Anspruch 15 oder 16, **dadurch gekennzeichnet, dass** der Träger (112) einen unteren Trägerabschnitt (194) aufweist, der der Aufstellfläche (106) zugewandt ist, und einen oberen Trägerabschnitt (196), der auf dem unteren Trägerabschnitt (194) aufsteht und mit diesem an einer Trennstelle (200) über Verbindungselemente verbunden ist, wobei die Seitentrocknungsvorrichtung (130) am oberen Trägerabschnitt (196) angeordnet und die Düseneinrichtung (138) und der Luftkanal (140) oberhalb der Trennstelle (200) positioniert ist.

## Claims

1. A nozzle device (138) for a side drying apparatus (130) of a vehicle treatment system (100), which nozzle device (138) is configured to be subjected to drying air flowing in an inflow direction and comprises or forms an outlet nozzle (176), which comprises a slit-shaped outlet opening (178) which extends from a first side (180) of the outlet nozzle (176) in the inflow direction to a second side (182) of the outlet nozzle (176) located downstream, wherein, in the intended use of the nozzle device (138), the first side (180) is arranged at the top and the second side (182) at the bottom of the outlet nozzle (176), and the outlet opening (178) has a different width at least in portions over its extension from the first side (180) in the direction of the second side (182), **characterized in that** the width of the outlet opening (178) on the second side (182) is greater than on the first side (180).

2. The nozzle device (138) in accordance with claim 1, **characterized in that** the width of the outlet opening (178) increases continuously from the first side (180) to the second side (182).

3. The nozzle device (138) in accordance with claim 1 or 2, **characterized in that** the outlet opening (178) has its smallest width on the first side (180) and/or **in that** the outlet opening (178) has its largest width on the second side (182).

4. The nozzle device (138) in accordance with any one of the preceding claims,
**characterized in that** at least one of the following applies:
- a ratio of the width of the outlet opening (178) on the second side (182) to the width of the outlet opening (178) on the first side (180) is approximately 1.2 to 2.5, preferably approximately 1.5 to 2;
- a ratio of the width of the outlet opening (178) on the second side (182) to the length of the outlet opening (178) from the second side (182) to the first side (180) is approximately 0.25 to 0.5, preferably approximately 0.3 to 0.4;
- a ratio of the width of the outlet opening (178) on the first side (180) to the length of the outlet opening (178) from the second side (182) to the first side (180) is approximately 0.1 to 0.4, preferably approximately 0.2 to 0.3.

5. The nozzle device (138) in accordance with any one of the preceding claims, **characterized in that** the outlet nozzle (176) has in particular a continuous taper in the direction of the outlet opening (178) and/or **in that** the nozzle device (138) comprises at least one contact portion (186) for contacting a holding body of the side drying apparatus (130) and an outlet portion (188) comprising the outlet opening (178) and projecting from the contact portion (186) in the flow direction of the drying air flowing out through the outlet opening (178), preferably **in that** two contact portions (186) are provided which are arranged spaced apart from one another and are separated from one another by a gap (184) through which drying air is flowable.

6. The nozzle device (138) in accordance with claim 5, **characterized in that** the at least one contact portion (186) is configured to be planar for flange-like application of the outlet nozzle (176) to the holding body and/or **in that** through-openings (190) positioned equidistant from one another are formed on the at least one contact portion (186).

7. A side drying apparatus (130) for a vehicle treatment system (100) for applying drying air to a side surface (132) of a vehicle (104) to be dried, comprising:
- a blower device (134) for providing a flow of drying air;
- an air guiding device (136);
- a nozzle device (138) in accordance with any one of claims 1 to 6, to which drying air is suppliable via the air guiding device (136).

8. The side drying apparatus (130) in accordance with claim 7,
**characterized in that** the air guiding device (136) is a hollow body (146) or comprises a hollow body (146) to which a blower housing (142) of the blower device (134) is fixed and which comprises or forms an inlet opening (162) for drying air, which comprises or forms an outlet opening (164) at which the nozzle device (138) is arranged, and which comprises or forms an air duct (140) running from the inlet opening (162) to the outlet opening (164), wherein the hollow body (146) is preferably formed by a carrier (112) extending in the vertical direction of a vehicle treatment system (100) comprising the side drying apparatus (130), in particular by a gantry column (114) of a gantry washing system.

9. The side drying apparatus (130) in accordance with claim 7 or 8,
**characterized in that** at least one of the following applies:
- the nozzle device (138) is fixed to an edge of the outlet opening (164), in particular by screwing;
- the hollow body (146) comprises a first duct wall (148) and a second duct wall (150) arranged at a distance, in particular parallel, to the first duct wall (148), which walls delimit the air duct (140) on opposite sides.

10. The side drying apparatus (130) in accordance with claim 9,
**characterized in that** the inlet opening (162) is formed in the first duct wall (148), and **in that** the blower housing (142) is connected to the hollow body (146) on an outer side facing away from the air duct (140), in particular by screwing.

11. The side drying apparatus (130) in accordance with claim 9 or 10,
**characterized in that** the outlet opening (164) is formed in a connecting wall (158) connecting the first duct wall (148) and the second duct wall (150), in particular **in that** the outlet opening (164) is less wide than a distance between the first duct wall (148) and the second duct wall (150) from one another, so that in the flow direction of the drying air, an impact surface (166) for drying air is formed laterally next to the outlet opening (164) on the connecting wall (158).

12. The side drying apparatus (130) in accordance with any one of claims 7 to 11,
**characterized in that** the air duct (140) has at least one cross-sectional taper (170) in the direction of travel from the inlet opening (162) to the outlet opening (164), wherein the cross section of the air duct (140) is preferably minimal on the second side (182) of the outlet nozzle (176).

13. The side drying apparatus (130) in accordance with claim 12, **characterized in that** the air duct (140) has at least one cross-sectional taper (170) upstream of the nozzle device (138) in the flow direction of the drying air and/or **in that** the air duct (140) has at least one cross-sectional taper (170) in the flow direction of the drying air at the level of the nozzle device (138) between the first side (180) and the second side (182).

14. The side drying apparatus (130) in accordance with claim 12 or 13,
**characterized in that** at least one of the following applies:
- the cross-sectional taper (170) of the air duct (140) is formed by a narrowing of the air duct (140) in only a first spatial direction (172), whereas the air duct (140) has no narrowing in a second spatial direction (174), which is oriented perpendicular to the first spatial direction (172);
- the hollow body (146) comprises an air guiding wall (160) connecting the first duct wall (148) and the second duct wall (150), wherein the taper of the cross section of the air duct (140) is defined solely by the course of the air guiding wall (160).

15. A vehicle treatment system (100), in particular a vehicle washing system (102), preferably configured as a gantry system, in particular a gantry washing system, comprising at least one side drying apparatus (130) in accordance with any one of claims 7 to 14 and a set-down surface (106) for a vehicle (104), wherein the nozzle device (138) is positioned laterally next to the set-down surface (106) and drying air exiting from the outlet nozzle (176) is directed onto a side surface (132) of the vehicle (104).

16. The vehicle treatment system (100) in accordance with claim 15, in particular in conjunction with claim 8, **characterized in that** in the carrier (112) forming the hollow body (146), in particular the gantry column (114), a separating wall (156) is arranged which is connected to two opposite side walls of the carrier (112) via connecting elements, in particular rivets, and forms a duct wall (148, 150, 152, 154) of the air duct (140).

17. The vehicle treatment system (100) in accordance with claim 15 or 16,
**characterized in that** the carrier (112) has a lower carrier portion (194) facing the set-down surface (106), and an upper carrier portion (196) which is positioned on the lower carrier portion (194) and connected thereto at a separation point (200) via connecting elements, wherein the side drying apparatus (130) is arranged on the upper carrier portion (196) and the nozzle device (138) and the air duct (140) are positioned above the separation point (200).

## Revendications

1. Dispositif de buse (138) pour un dispositif de séchage latéral (130) d'une installation de traitement de véhicules (100), ce dispositif de buse (138) pouvant être alimenté en air de séchage s'écoulant dans une direction d'arrivée et comprenant ou formant une buse de sortie (176) qui comprend une ouverture de sortie en forme de fente (178) s'étendant à partir d'un premier côté (180) de la buse de sortie (176) situé dans la direction d'arrivée jusqu'à un deuxième côté (182) de la buse de sortie (176) situé en aval de l'écoulement, dans lequel, lors de l'utilisation conforme à l'usage prévu du dispositif de buse (138), le premier côté (180) est disposé en haut et le deuxième côté (182) en bas de la buse de sortie (176), et l'ouverture de sortie (178) présente, sur son étendue du premier côté (180) en direction du deuxième côté (182), au moins à certains endroits, une largeur de taille différente, **caractérisé en ce que**
la largeur de l'ouverture de sortie (178) est plus grande au deuxième côté (182) qu'au premier côté (180).

2. Dispositif de buse (138) selon la revendication 1, **caractérisé en ce que** la largeur de l'ouverture de sortie (178) augmente continûment du premier côté (180) au deuxième côté (182).

3. Dispositif de buse (138) selon la revendication 1 ou 2, **caractérisé en ce que** l'ouverture de sortie (178) présente sa largeur la plus petite au premier côté (180) et/ou **en ce que** l'ouverture de sortie (178) présente sa largeur la plus grande au deuxième côté (182).

4. Dispositif de buse (138) selon l'une des revendications précédentes, **caractérisé en ce qu'**au moins l'une des conditions suivantes est remplie :
- un rapport entre la largeur de l'ouverture de sortie (178) sur le deuxième côté (182) et la largeur de l'ouverture de sortie (178) sur le premier côté (180) est d'environ 1,2 à 2,5, de préférence d'environ 1,5 à 2 ;
- un rapport entre la largeur de l'ouverture de sortie (178) sur le deuxième côté (182) et la longueur de l'ouverture de sortie (178) du deuxième côté (182) au premier côté (180) est d'environ 0,25 à 0,5, de préférence d'environ 0,3 à 0,4 ;
- un rapport entre la largeur de l'ouverture de sortie (178) sur le premier côté (180) et la longueur de l'ouverture de sortie (178) du deuxième côté (182) au premier côté (180) est d'environ 0,1 à 0,4, de préférence d'environ 0,2 à 0,3.

5. Dispositif de buse (138) selon l'une des revendications précédentes, **caractérisé en ce que** la buse de sortie (176) présente un rétrécissement, plus particulièrement continu, en direction de l'ouverture de sortie (178) et/ou **en ce que** le dispositif de buse (138) comprend au moins une section d'appui (186) pour s'appuyer contre un corps de maintien du dispositif de séchage latéral (130) et une section de sortie (188) comprenant l'ouverture de sortie (178) et s'étendant à partir de la section d'appui (186) dans la direction d'écoulement de l'air de séchage sortant par l'ouverture de sortie (178), de préférence **en ce que** deux sections d'appui (186) espacées l'une de l'autre sont prévues, qui sont séparées l'une de l'autre par un espace intermédiaire (184) pouvant être traversées par l'air de séchage.

6. Dispositif de buse (138) selon la revendication 5, **caractérisé en ce que** l'au moins une section d'appui (186) est conçue de manière plane pour un appui de type bride de la buse de sortie (176) sur le corps de maintien et/ou **en ce que** des ouvertures de passage (190), plus particulièrement positionnées de manière équidistante les unes par rapport aux autres, sont formées sur l'au moins une section d'appui (186).

7. Dispositif de séchage latéral (130) pour une installation de traitement de véhicules (100) pour appliquer de l'air de séchage sur une surface latérale (132) d'un véhicule (104) à sécher, comprenant :
- un dispositif de soufflerie (134) pour fournir un flux d'air de séchage ;
- un dispositif de guidage d'air (136) ;
- un dispositif de buse (138) selon l'une des revendications 1 à 6, auquel de l'air de séchage peut être amené via le dispositif de guidage d'air (136).

8. Dispositif de séchage latéral (130) selon la revendication 7, **caractérisé en ce que** le dispositif de guidage d'air (136) est corps creux (146) ou comprend un corps creux (146) sur lequel un boîtier de soufflerie (142) du dispositif de soufflerie (134) est fixé et qui comprend ou forme une ouverture d'entrée (162) pour l'air de séchage, qui comprend ou forme une ouverture de sortie (164) au niveau de laquelle le dispositif de buse (138) est disposé, et qui comprend ou forme un canal d'air (140) s'étendant de l'ouverture d'entrée (162) à l'ouverture de sortie (164), dans lequel le corps creux (146) est de préférence constitué d'un support (112) s'étendant dans le sens de la hauteur d'une installation de traitement de véhicules (100) comprenant le dispositif de séchage latéral (130), plus particulièrement d'une colonne de portique (114) d'une installation de lavage à portique.

9. Dispositif de séchage latéral (130) selon la revendication 7 ou 8, **caractérisé en ce qu'**au moins l'une des conditions suivantes est remplie :
- le dispositif de buse (138) est fixé sur un bord de l'ouverture de sortie (164), plus particulièrement par vissage ;
- le corps creux (146) comprend une première paroi de canal (148) et une deuxième paroi de canal (150) disposée à distance, plus particulièrement parallèlement, par rapport à la première paroi de canal (148), lesquelles délimitent le canal d'air (140) sur des côtés opposés l'un à l'autre.

10. Dispositif de séchage latéral (130) selon la revendication 9, **caractérisé en ce que** l'ouverture d'entrée (162) est formée dans la première paroi de canal (148) et **en ce que** le boîtier de soufflerie (142) est relié au corps creux (146) sur un côté extérieur opposé au canal d'air (140), plus particulièrement par vissage.

11. Dispositif de séchage latéral (130) selon la revendication 9 ou 10, **caractérisé en ce que** l'ouverture de sortie (164) est formée dans une paroi de liaison (158) reliant la première paroi de canal (148) et la deuxième paroi de canal (150), plus particulièrement **en ce que** l'ouverture de sortie (164) est moins large qu'une distance entre la première paroi de canal (148) et la deuxième paroi de canal (150), de sorte qu'une surface de choc (166) pour l'air de séchage est formée sur la paroi de liaison (158) latéralement à côté de l'ouverture de sortie (164) dans la direction d'écoulement de l'air de séchage.

12. Dispositif de séchage latéral (130) selon l'une des revendications 7 à 11, **caractérisé en ce que** le canal d'air (140) présente au moins un rétrécissement de section transversale (170) dans la direction de son trajet de l'ouverture d'entrée (162) à l'ouverture de sortie (164), la section transversale du canal d'air (140) étant de préférence minimale sur le deuxième côté (182) de la buse de sortie (176).

13. Dispositif de séchage latéral (130) selon la revendication 12, **caractérisé en ce que** le canal d'air (140) présente, dans la direction d'écoulement de l'air de séchage, au moins un rétrécissement de section transversale (170) en amont du dispositif de buse (138) et/ou **en ce que** le canal d'air (140) présente, dans la direction d'écoulement de l'air de séchage, au moins un rétrécissement de section transversale (170) au niveau du dispositif de buse (138) entre le premier côté (180) et le deuxième côté (182).

14. Dispositif de séchage latéral (130) selon la revendication 12 ou 13, **caractérisé en ce qu'**au moins l'une des conditions suivantes est remplie :
- le rétrécissement de section transversale (170) du canal d'air (140) est constitué d'un étranglement du canal d'air (140) uniquement dans une première direction spatiale (172), tandis que le canal d'air (140) ne présente pas d'étranglement dans une deuxième direction spatiale (174) orientée perpendiculairement à la première direction spatiale (172) ;
- le corps creux (146) comprend une paroi de guidage d'air (160) reliant la première paroi de canal (148) et la deuxième paroi de canal (150), le rétrécissement de la section transversale du canal d'air (140) étant défini uniquement par le tracé de la paroi de guidage d'air (160).

15. Installation de traitement de véhicules (100), plus particulièrement installation de lavage de véhicules (102), de préférence conçue comme une installation à portique, plus particulièrement une installation de lavage à portique, comprenant au moins un dispositif de séchage latéral (130) selon l'une des revendications 7 à 14 et une surface d'installation (106) pour un véhicule (104), dans laquelle le dispositif de buse (138) est positionné latéralement à côté de la surface d'installation (106) et l'air de séchage sortant de la buse de sortie (176) est dirigé vers une surface latérale (132) du véhicule (104).

16. Installation de traitement de véhicules (100) selon la revendication 15, plus particulièrement en relation avec la revendication 8, **caractérisée en ce qu'**une paroi de séparation (156) est disposée dans le support (112) formant le corps creux (146), plus particulièrement la colonne de portique (114), qui est reliée respectivement à deux parois latérales opposées du support (112) par des éléments de liaison, plus particulièrement des rivets, et forme une paroi de canal (148, 150, 152, 154) du canal d'air (140).

17. Installation de traitement de véhicules (100) selon la revendication 15 ou 16, **caractérisée en ce que** le support (112) présente une section de support inférieure (194) qui est tournée vers la surface d'installation (106) et une section de support supérieure (196) qui repose sur la section de support inférieure (194) et est reliée à celle-ci au niveau d'une zone de séparation (200) par des éléments de liaison, dans laquelle le dispositif de séchage latéral (130) est disposé sur la section de support supérieure (196) et le dispositif de buse (138) et le canal d'air (140) sont positionnés au-dessus de la zone de séparation (200).
